# EUROPÄISCHE PATENTSCHRIFT

(11) **EP 0 613 797 B1**
(45) Veröffentlichungstag und Bekanntmachung des Hinweises auf die Patenterteilung: **08.04.1998**
(21) Anmeldenummer: 93119240.5
(22) Anmeldetag: 30.11.1993
(51) Int. Cl.: B60J 5/04

(54) **Fahrzeugtür**
Vehicle door
Porte de véhicule

(30) Priorität: 01.03.1993 DE 4306290
(43) Veröffentlichungstag der Anmeldung: 07.09.1994
(73) Patentinhaber: YMOS AKTIENGESELLSCHAFT Industrieprodukte, 63179 Obertshausen (DE)
(72) Erfinder: Heim, Gunther, Dipl.-Ing., D-63179 Obertshausen (DE); Kroll, Bruno, Dipl.-Ing., D-42477 Radevormwald (DE)
(74) Vertreter: Schieferdecker, Lutz, Dipl.-Ing.

(56) Entgegenhaltungen:
- EP-A- 0 142 435
- EP-A- 0 432 590
- GB-A- 2 101 535

## Beschreibung

Die Erfindung betrifft eine Fahrzeugtür und insbesondere eine für Kraftfahrzeuge bestimmte Tür in Rahmenbauweise mit den Merkmalen des Oberbegriffes des Anspruches 1.

Eine Tür der genannten Art ist aus der EP 0 142 435 A2 bekannt und umfaßt einen als tragendes Tür-Tragemodul dienenden Türrahmen, der aus mindestens zum Teil profilierten Rahmenteilen gebildet ist.

Zu der Fahrzeugtür gehören ferner ein Fensterheber zum Öffnen und Schließen einer Fensterscheibe und weitere Türelemente, wie z.B. ein Türaußenhaut und eine Türinnenverkleidung mit jeweils zugehörigen Komponenten als weitere Türmodule.

Ferner ist aus der GB 21 01 535 A eine Fahrzeugtür bekannt, die in Kastenbauweise gefertigt ist und zur Führung einer Fensterscheibe dienende Fensterrahmenteile aufweist. Diese Fensterrahmenteile besitzen für die Fahrzeugtür keine tragende Funktion. Charakteristisch für diese bekannte Fahrzeugtür ist vielmehr, daß ein horizontaler Träger etwa in Höhe der Unterkante der Fensteröffnung und ferner ein leicht schräg geneigter Träger sowohl mit einer Grundplatte für einen Fensterheber als auch mit Scharnieren und Schloßteilen unmittelbar verbunden sind. Darüber hinaus sind ein vorderes und ein hinteres Stanzteil vorgesehen, die sich nahezu über die gesamte Höhe der Türinnenverkleidung erstrecken und an denen der Fensterrahmen sowie ein unteres Türrahmenteil befestigt sind.

Der Erfindung liegt gegenüber diesem Stand der Technik die Aufgabe zugrunde, eine Fahrzeugtür dahingehend zu optimieren, daß neben einer Gewichtseinsparung auch eine kostengünstige Herstellung und Erleichterungen bei der Montage erzielbar sind.

Diese Aufgabe wird mit den Merkmalen des kennzeichnenden Teiles des Anspruches 1 gelöst.

Gemäß der Erfindung ist somit vorgesehen, daß mindestens ein den Türrahmen bildendes, tragendes Rahmenteil eine Hohlkammer und in einstückiger Ausbildung mindestens teilweise Begrenzungswände zur Bildung eines seitlich offenen Führungskanales für die Fensterscheibe aufweist.

Die Führung der Fensterscheibe ist somit unmittelbar in ein als tragendes Tür-Tragemodul dienendes Bauteil integriert. Dies erlaubt eine kostengünstige Herstellung und eine vereinfachte Montage, da das bzw. die Rahmenteile in günstiger Art und Weise z.B. als Strangpreßprofile gefertigt werden können. Darüber hinaus läßt sich sehr vorteilhaft auch der Fensterheber mit seinen Komponenten in die besagten Teile integrieren.

In Weiterbildung der Erfindung ist ferner vorgesehen, daß die Hohlkammer in dem Rahmenteil eine geschlossene Hohlkammer ist. Hierdurch lassen sich bei gleicher Materialstärke wie bisher größere Kräfte aufnehmen oder es kann mit geringeren Materialstärken als bisher gearbeitet werden.

Vorzugsweise ist darüber hinaus vorgesehen, daß ein Fensterrahmenteil mit seinen Enden und dem Türrahmen ein Dreiecksfeld bildet. Auch diese Maßnahme erhöht die Steifigkeit der Fahrzeugtür.

Weitere Merkmale der Erfindung gehen aus Unteransprüchen hervor.

Die Erfindung wird nachstehend anhand von Ausführungsbeispielen, die in der Zeichnung dargestellt sind, näher beschrieben. Dabei zeigen:
- Fig. 1:: eine perspektivische Darstellung der aus Türrahmen, Fensterheber und Fensterführung bestehenden Baueinheit;
- Fig. 2:: einen Schnitt längs der Linie II-II in Fig. 1;
- Fig. 3:: einen Schnitt wie in Fig. 2 von einer abgewandelten Ausführungsform;
- Fig. 4:: einen Schnitt längs der Linie IV-IV in Fig. 1;
- Fig. 5:: eine perspektivische Ansicht einer Baueinheit wie in Fig. 1 mit einem Kabelfensterheber;
- Fig. 6:: einen Schnitt längs der Linie VI-VI in Fig. 5;
- Fig. 7:: einen Schnitt wie in Fig. 6 von einer abgewandelten Ausführungsform;
- Fig. 8:: eine Ansicht einer Baueinheit wie in den Fig. 1 und 5, jedoch mit einem Scherenfensterheber;
- Fig. 9:: einen Schnitt längs der Linie IX-IX in Fig. 8;

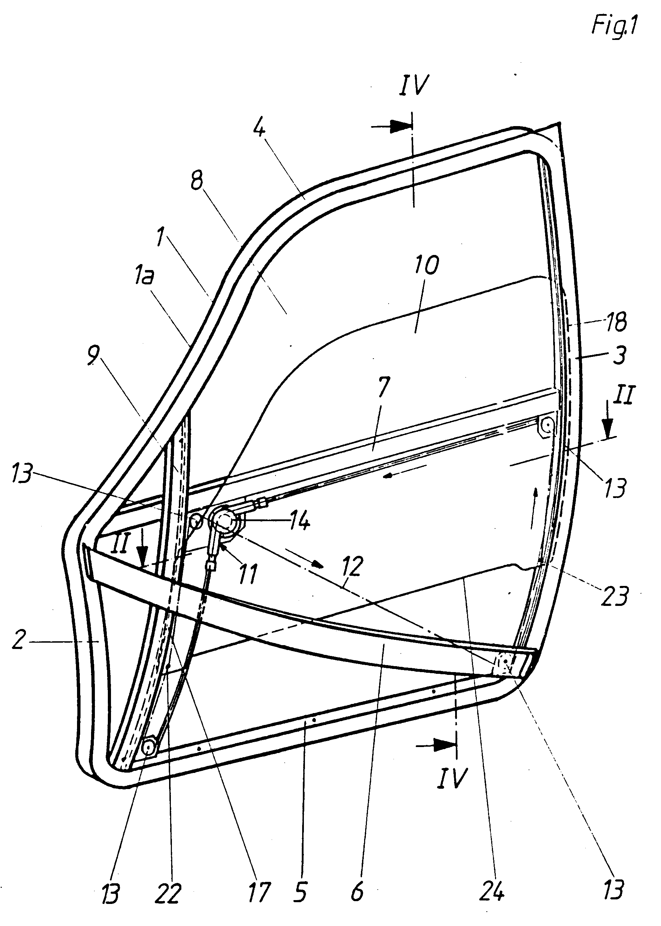

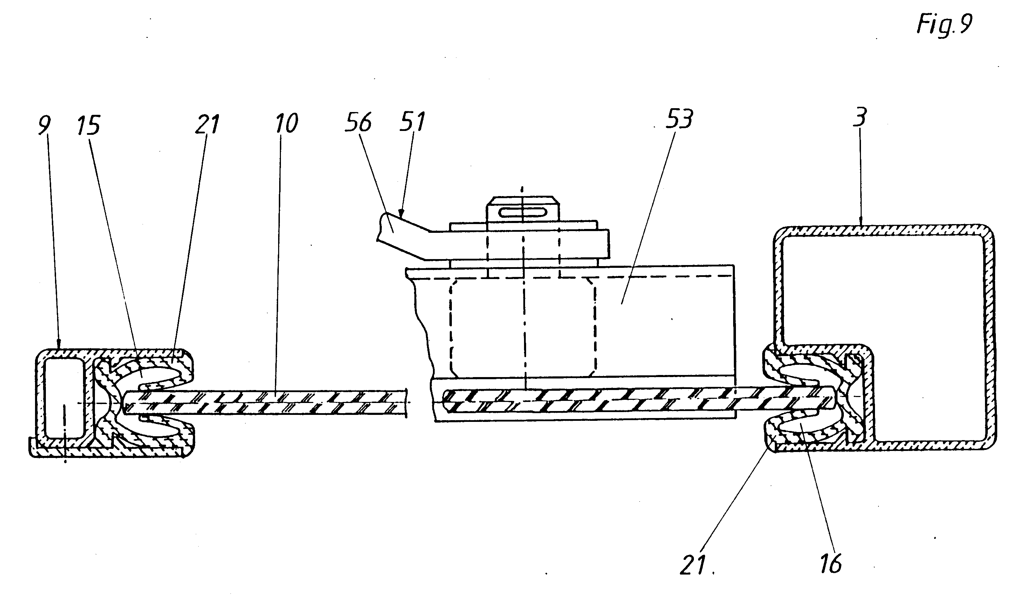

- Fig.1o:: einen Schnitt wie in Fig. 9 von einer abgewandelten Ausführungsform;

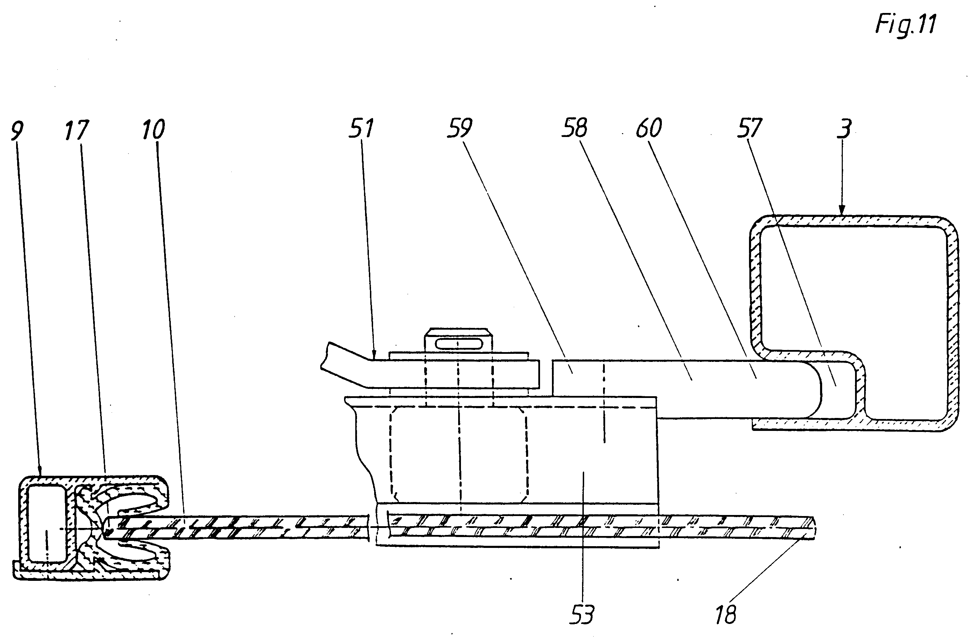

- Fig.11:: einen Schnitt wie in den Fig. 9 und 1o von einem weiteren Ausführungsbeispiel und

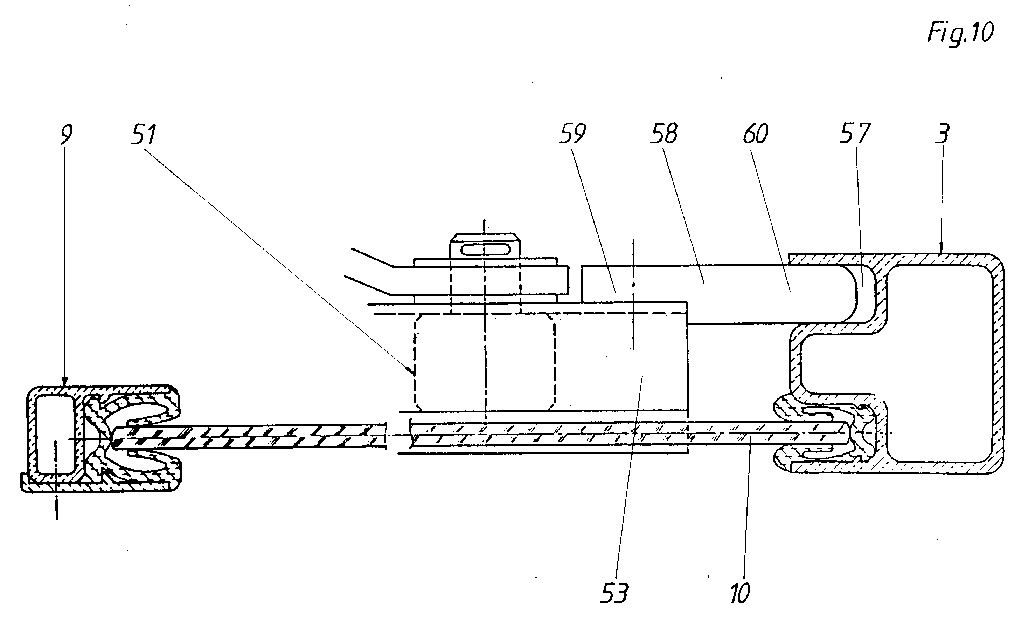

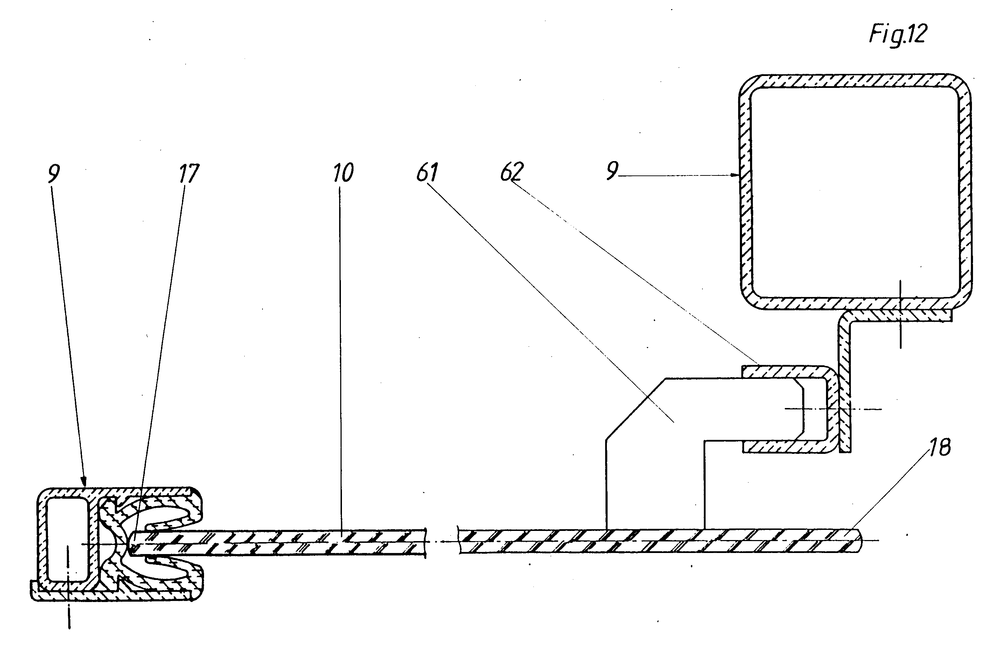

- Fig.12:: einen Schnitt ähnlich denen der Figuren 9 - 11 durch ein letztes Ausführungsbeispiel.

Zur Herstellung einer Fahrzeugtür und insbesondere einer Kraftfahrzeugtür in Rahmenbauweise ist gemäß dem in Fig. 1 dargestellten Ausführungsbeispiel ein Türrahmen 1 vorgesehen, der ein Tür-Tragemodul 1a darstellt, das mindestens ein vorderes Rahmenteil 2, ein hinteres Rahmenteil 3 und ein oberes Rahmenteil 4 umfasst. Gemäß Ausführungsbeisiel ist der Türrahmen 1 auch unten durch ein gleichartiges unteres Rahmenteil 5 geschlossen. Eine Diagonalstrebe 6 dient zur Versteifung und ein waagerecht angeordnetes Rahmenteil 7 begrenzt eine Fensteöffnung 8 nach unten. Ein parallele zum hinteren Rahmenteil 3 angeordnetes Fensterrahmenteil 9 dient teiltweise zur Begrenzung der Fensteröffnung 8 nach vorne und dient ferner zugleich zur Führung einer Fensterscheibe 1o, die mit Hilfe eines Fensterhebers 11 vertikal verstellbar ist. Bei dem in Fig. 1 dargestellten Fensterheber 11 handelt es sich um einen Seilfensterheber mit einem Zugseil 12, mit dessen Hilfe die Fensterscheibe 1o aus der dargestellten, mittleren Stellung in die Schließstellung angehoben wird, wenn sich das Zugseil 12 in Richtung der Pfeile bewegt.

Zur Führung des Zugseiles 12 sind Seilumlenkrollen 13 vorgesehen, die direkt am Fensterrahmenteil 9 und/oder an Rahmenteilen 3, 7 des Türrahmens 1 oder an Montageteilen angeordnet sind, die mit den Rahmenteilen 3, 5, 7 des Türrahmens 1 bzw. mit dem waagerechten Rahmenteil 7 verbunden sind. Ferner ist ein Antrieb 14 für das Zugseil 12 vorgesehen und auch grundsätzlich bekannt, so daß hierauf nicht mehr einzugehen ist.

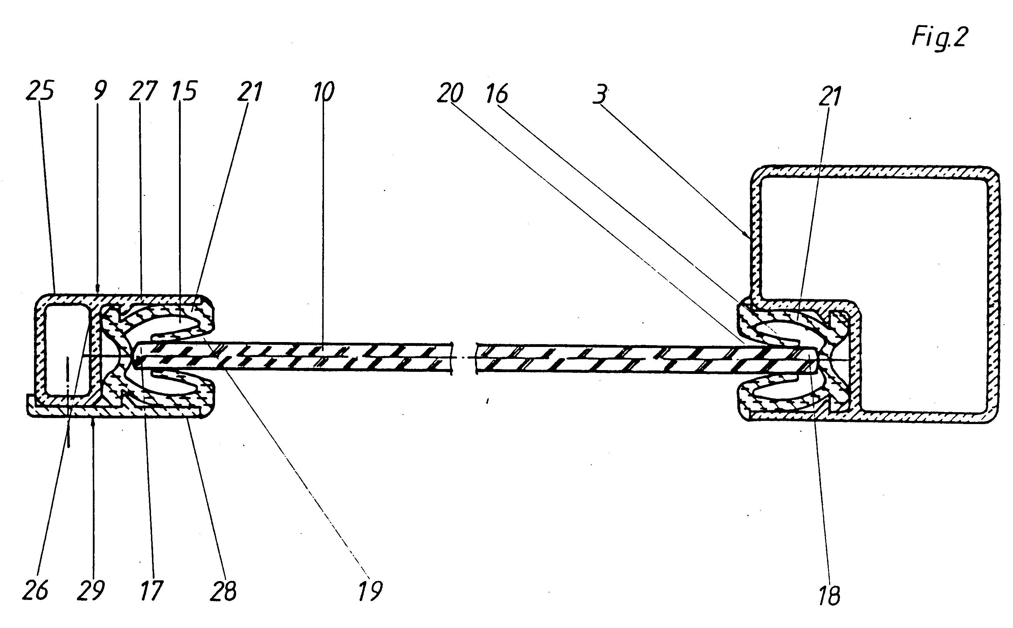

Das hintere Rahmenteil 3 und das sich parallel zu diesem erstreckende Fensterrahmenteil 9 dienen jeweils zur Führung der Fensterscheibe 1o. Hierzu weisen das Fensterrahmenteil 9 und das hintere Rahmenteil 3 jeweils eine sich im wesentlichen über ihre gesamte Länge erstreckende, seitlich offene Profilkammer 15 bzw. 16 auf und gemäß Ausführungsbeispiel ist die Fensterscheibe 1o mit ihren freien, vertikalen Rändern 17, 18 in den Profilkammern 15,16 angeordnet und geführt. Die den vorderen und den hinteren Rand 17 bzw. 18 der Fensterscheibe 1o aufnehmenden Profilkammern 15 bzw. 16 sind aneinander zugewandten Seiten 19, 2o offen. Sie weisen U-förmige angeordnete Begrenzungswände auf. Ferner ist jeweils mindestens ein den Rand 17 bzw. 18 der Fensterscheibe 1o U-förmig umgreifendes Dichtungs- und Führungselement 21, in der jeweiligen Profilkammer 15, bzw. 16 angeordnet, wie dies aus Fig. 2 ersichtlich ist. In diesen Dichtungs- und Führungselementen 21, ist die Scheibe 1o schwimmend gelagert.

Die Befestigung des Zugseiles 12 an der Fensterscheibe erfolgt gemäß den in Fig. 1 dargestellten Ausführungsbeispiel an Fixpunkten 22 bzw. 23 nahe bei dem unteren Rand 24 der Fensterscheibe 1o sowie außerhalb der Profilkammern 15, 16.

Das Fensterrahmenteil 9 ist gemäß Fig. 2 zweckmäßigerweise mehrteilig. Es umfasst ein Hohlprofil 25, zu dem auch der Boden 26 und die eine Begrenzungswand 27 der Profilkammer 15 gehören. Die andere Begrenzungswand 28 der Profilkammer 15 wird von einem zweiten Teil in Gestalt eines Profilstabes 29 gebildet, der z.B. mit dem Hohlprofil 25 verschraubt sein kann. Die Zweiteiligkeit des Fensterrahmenteiles 9 ist aus Montagegründen zweckmäßig.

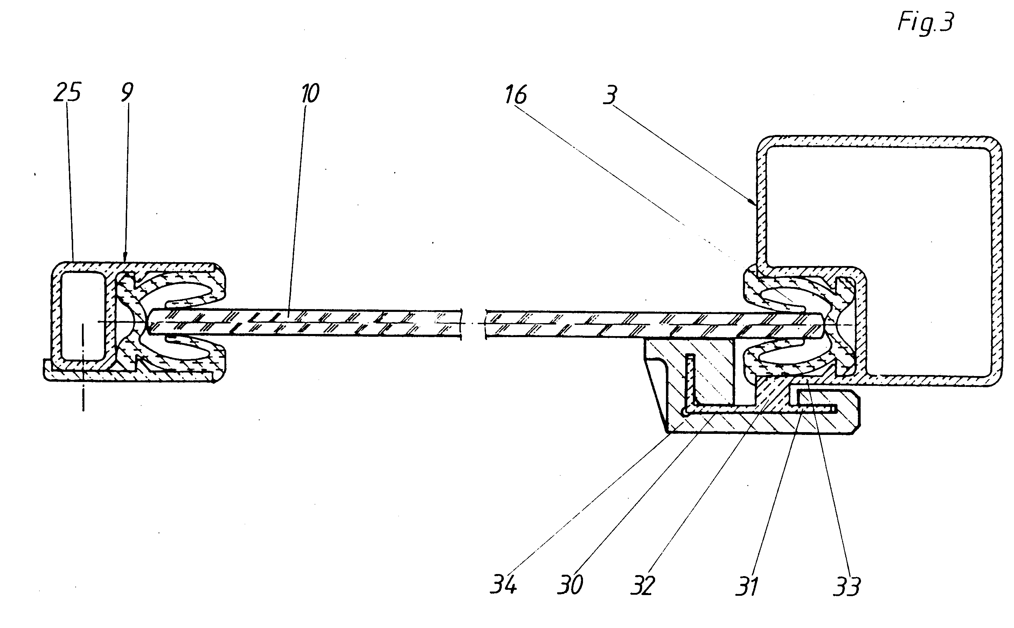

Fig. 3 zeigt ebenfalls im Querschnitt eine abgewandelte Ausführungsform, wobei für gleiche oder gleichartige Teile nachfolgende dieselben Bezugszahlen verwendet sind.

Das Rahmenteil 3 gemäß Fig. 3 weist Führungsrippen 30, 31 zur Führung der Fensterscheibe 1o auf. Die Führungsrippen 30, 31 sind im Querschnitt F-förmig und mit ihrem kurzen Querschenkel 32 an der äußeren Begrenzungswand 33 der Profilkammer 16 angeordnet. Mindestens ein Führungsstück 34 umgreift die Führungsrippen 3o, 31 und ist mit der Fensterscheibe 1o verbunden.

Wesentlich ist schließlich noch - und dies gilt für alle Ausführungsbeispiele - , daß das Fensterrahmenteil 9 und gleichermaßen das hintere Rahmenteil des Türrahmens 1 die Fensterscheibe 1o über ihre gesamte Hubhöhe führen, wobei diese Führung unmittelbar in das Rahmenteil 3 integriert ist.

Das Führungsstück 34 führt schließlich die Fensterscheibe 1o wesentlich genauer als die Dichtungs- und Führungselemente 21.

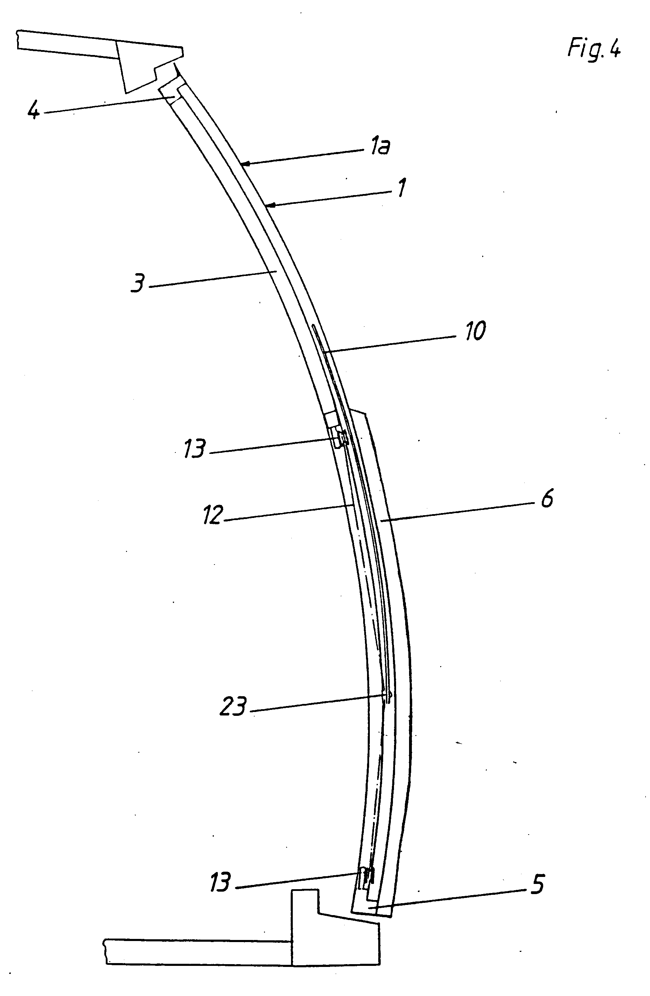

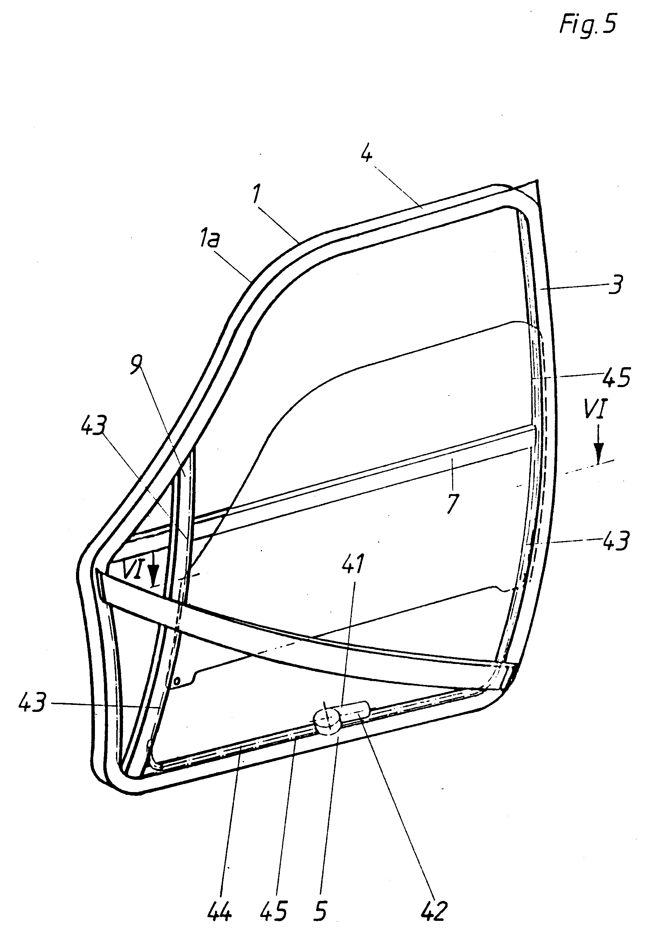

Das in den Fig. 5- 7 dargestellte Ausführungsbeispiel unterscheidet sich von der Ausführungsform gemäß den Fig. 1 - 4 in erster Linie dadurch, daß ein Kabelfensterheber 41 mit einem Antrieb 42 vorgesehen ist und daß Führungskanäle 43 für das bzw. die Zug- und Druckkabel 44 zusätzlich in das Fensterrahmenteil 9 bzw. das hintere Rahmenteil 3 integriert sind. Bei Verwendung von zwei Zug- und Druckkabeln 44 befindet sich auch ein Führungskanal 45 für das Leertrum 46 in dem hinteren Rahmenteil 3, und ebenfalls zwei Führungskanäle 43 und 45 sind in dem unteren Rahmenteil 5 angeordnet. Das Fensterrahmenteil 9 braucht in der Regel nur einen Führungskanal 43 zur Führung des aktiven Teiles des Zug- und Druckkabels 44.

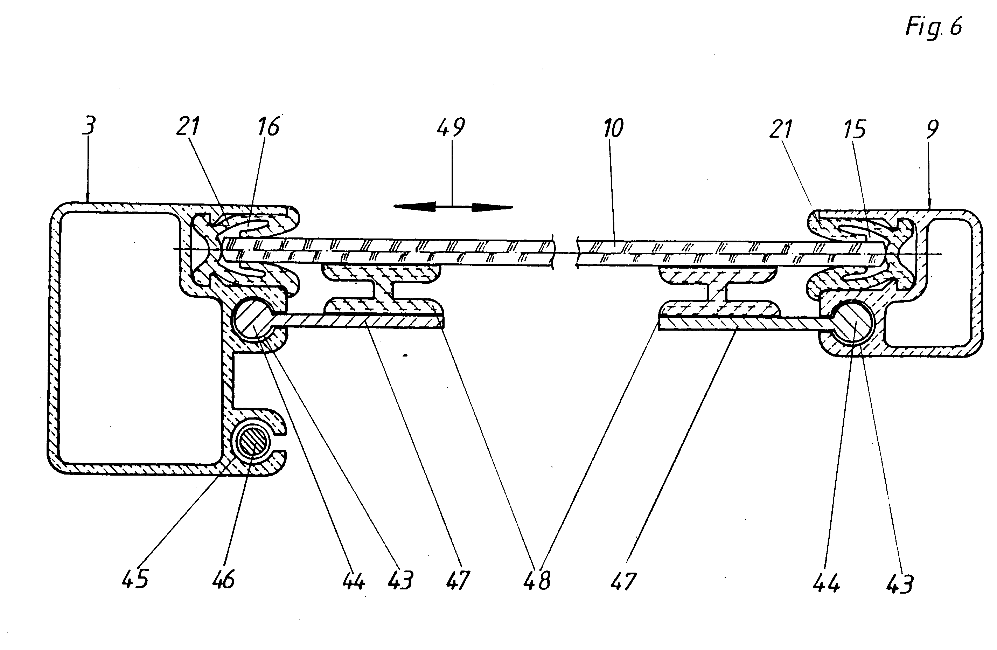

Die Führungskanäle 43 sind jeweils parallel zur Scheibe 1o offen, so daß ein Mitnehmer 47 das jeweilige Teil des Zug- und Druckkabels 44 mit der Fensterscheibe 1o verbinden kann, wie dies auch aus Fig. 6 hervorgeht. Die Form und Gestalt der beiden Mitnehmer 47 ist bei dem in fig. 6 dargestellten Ausführungsbeispiel gleich, wobei ein elastischer Puffer 48 jeweils zwischen den Mitnehmern 47 und der Fensterscheibe 1o angeordnet ist. Die Fensterscheibe 1o ist daher gemäß dem Pfeil 49 in Fig. 6 schwimmend in den Dichtungs- und Führungselementen 21 in den Profilkammern 15, 16 des Fensterrahmenteiles 9 und des hinteren Rahmenteiles 3 gelagert.

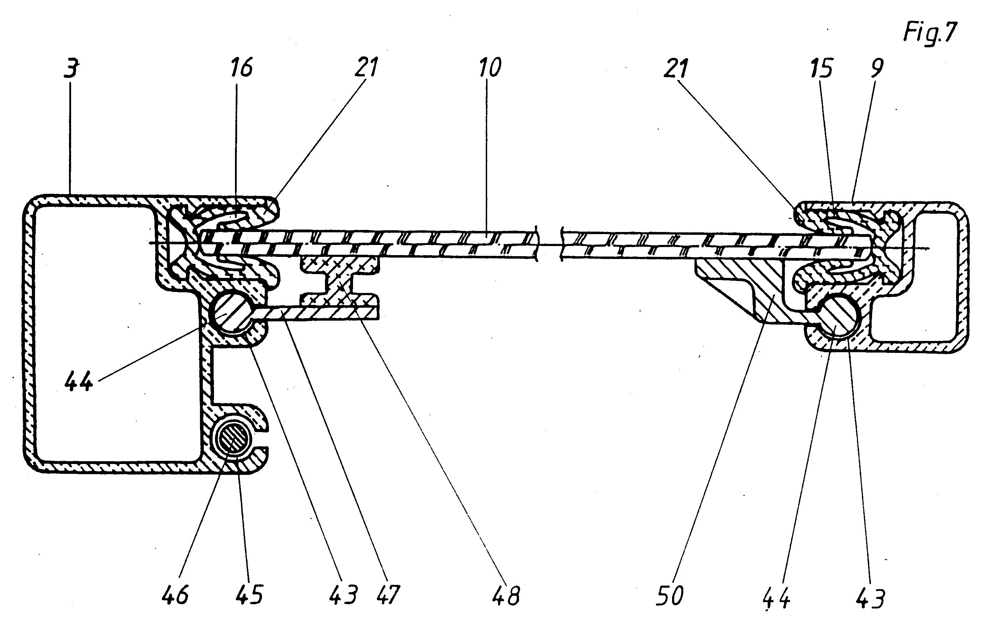

Bei dem in Fig. 7 dargestellten Ausführungsbeispiel ist ein Mitnehmer 47 ebenfalls über einen elastischen Puffer 48 mit der Fensterscheibe 1o verbunden, während der andere Mitnehmer 5o starr in dem ihm zugeordneten Führungskanal 43 geführt ist und auch starr mit der Fensterscheibe 1o verbunden ist. In diesem Falle ist die Fensterscheibe 1o vergleichsweise sehr viel genauer geführt als bei der Ausführungsform gemäß Fig. 6.

Charakteristisch für den Kabelfensterheber 41 ist im Vergleich zum Seilfensterheber 11 gemäß dem zuerst beschriebenen Ausführungsbeispiel, daß das Zug- und Druckkabel 43 zumindest über einen Teil seiner Länge eine derartige Gestaltung besitzt, daß es mit Hilfe des Antriebes nicht nur Zugkräfte wie das Zugseil 12 des Seilfensterhebers 11 übertragen kann, sondern auch Druckkräfte. Im Regelfall weist der Antrieb 42 des Kabelfensterhebers ein Ritzel auf, das mit dem Zug-und Druckkabel 44 zusammenwirkt.Dazu kann das Zug- und Druckkabel 44 Gewindegänge aufweisen.

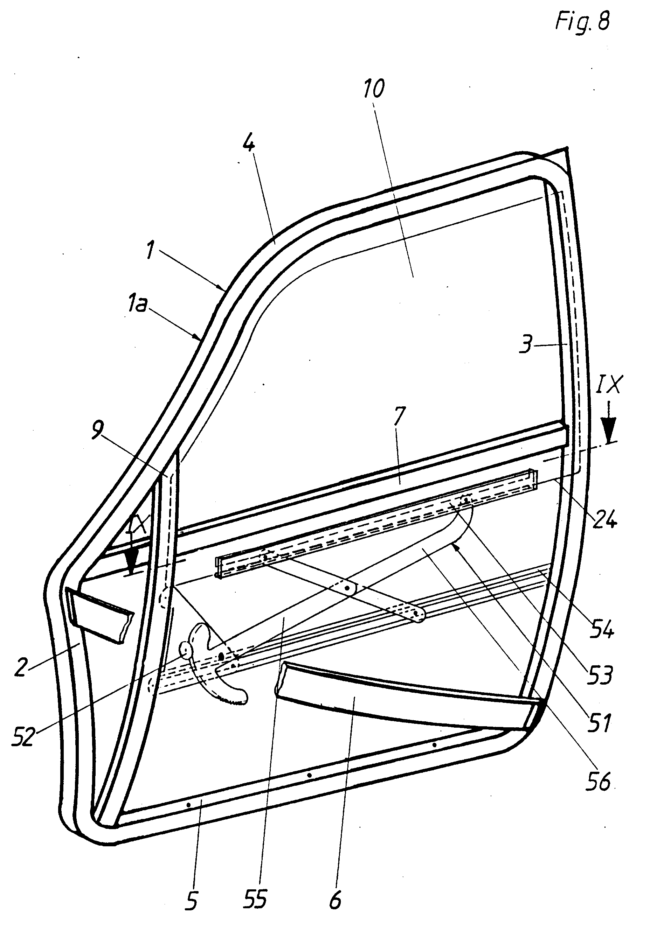

Die in den Figuren 8 - 11 dargestellte Ausführungsform zeigt einen Türrahmen 1 mit einem Scherenfensterheber 51. Auch hier gilt wieder, daß gleiche oder gleichartige Teile dieselben Bezugszahlen tragen wie bei den zuerst beschriebenen Ausführungsformen.

Auch bei der den Scherenfensterheber 51 aufweisenden Ausführungsform ist wie beim Seilfensterheber 11 nur die Fensterscheibe 1o in dem Fensterrahmenteil 9 und in dem hinteren Rahmenteil 3 des Türrahmens 1 geführt. Die Querschnitte des Fensterrahmenteiles 9 und des hinteren Rahmenteiles 3 stimmen daher mit denen beim Seilfensterheber 11 überein, wie ein Vergleich der Figuren 2 und 9 zeigt. Die Befestigung des Scherenfensterhebers 51 mit seinem Antrieb 52 und den in Schienen 53, 54 geführten Scherenelementen 55, 56 erfolgt an dem Fensterrahmenteil 9 und an dem hinteren Rahmenteil 3. Die eine Schiene 53 ist dabei ferner am unteren Rand 24 der Fensterscheibe 1o angeordnet.

Während Fig. 9 den Fall betrifft, daß die Fensterscheibe 1o schwimmend in den Führungs- und Dichtungselementen 21 geführt ist, die sich in den Profilkammern 15 und 16 des Fensterrahmenteiles 9 und des hinteren Rahmenteiles 3 befinden, betrifft Fig. 1o den Fall, daß die am Rand 24 angreifende Schiene 53 des Scherenfensterhebers 51 zusätzlich in dem hinteren Rahmenteil 3 in einem weiteren Führungskanal 57 geführt ist. Hierzu ist ein Zwischenstück 58 vorgesehen, das mit seinem einen Ende 59 mit der Schiene 53 verbunden ist, während es mit seinem anderen freien Ende 6o in den Führungskanal 57 greift.

Fig. 11 betrifft den Fall, daß der Türrahmen für ein Kabriolett bestimmt ist. Hier ist nur der vordere Rand 17 der Fensterscheibe 1o in dem Fensterrahmenteil 9 geführt, während der hintere Rand 18 sich nicht in einer Profilkammer des hinteren Rahmenteiles 3 befindet, da das hintere Rahmenteil 3 versetzt zur Fensterscheibe 1o angeordnet ist. Um auch hier eine Führung zu erzielen, weist das hintere Rahmenteil 3 einen Führungskanal 57 wie im Falle der Ausführungsform gemäß Fig. 1o auf, und ein Zwischenstück 58 liegt mit seinem einen Ende 6o in dem Führungskanal 57 und ist mit seinem anderen Ende 59 im Falle der Verwendung eines Scherenfensterhebers 51 mit der am unteren Rand 24 der Fensterscheibe 1o angreifenden Schiene 53 verbunden.

Fig. 12 zeigt schließlich noch einen vergleichbaren Fall für einen anderen Fensterheber. Auch hier ist die Fensterscheibe 1o mit ihrem vorderen Rand 17 nur im Fensterrahmenteil 9 angeordnet und geführt, während der hintere Rand 18 frei ist. Um auch dort eine Führung zu erzielen, greift ein mit der Fensterscheibe 1o verbundenes Führungsstück 61 in eine U-förmige Leiste 62, die in geeigneter Weise mit dem hinteren Rahmenteil 3 des Türrahmens verbunden ist.

## Patentansprüche

1. Fahrzeugtür, insbesondere Kraftfahrzeugtür in Rahmenbauweise, die einen tragenden, ein Tür-Tragemodul (1a) bildenden Türrahmen (1) mit Rahmenteilen umfaßt und einen Fensterheber (11, 41, 51) zum Öffnen und Schließen einer Fensterscheibe (10) und weitere Türelemente aufweist, dadurch gekennzeichnet, daß mindestens ein den Türrahmen (1) bildendes, tragendes Rahmenteil (3, 9) eine Hohlkammer und in einstückiger Ausbildung mindestens teilweise Begrenzungswände zur Bildung eines seitlich offenen Führungskanales für die Fensterscheibe (10) aufweist.

2. Fahrzeugtür nach Anspruch 1, dadurch gekennzeichnet, daß das Rahmenteil (3, 9) eine geschlossene Hohlkammer aufweist.

3. Fahrzeugtür nach mindestens einem der vorhergehenden Ansprüche, dadurch gekennzeichnet, daß ein Fensterrahmenteil (9) vorgesehen ist und mit seinen Enden und dem Türrahmen (1) ein Dreiecksfeld bildet.

4. Fahrzeugtür nach mindestens einem der vorhergehenden Ansprüche, dadurch gekennzeichnet, daß das als Führung für die Fensterscheibe (10) dienende Fensterrahmenteil (9) derart in den Türrahmen (1) integriert ist, daß es sich unter Bildung des Dreiecksfeldes von einem oberen Rahmenteil zu einer unteren Rahmenecke erstreckt.

5. Fahrzeugtür nach mindestens einem der vorhergehenden Ansprüche, dadurch gekennzeichnet, daß das Fensterrahmenteil (9) mehrteilig ist und mindestens ein Hohlprofil (25) mit einem Boden (26) und einer Begrenzungswand (27) für eine Profilkammer (15) umfaßt, wobei die andere Begrenzungswand (28) der Profilkammer (15) von einem zweiten Teil in Gestalt eines Profilstabes (29) gebildet ist.

6. Fahrzeugtür nach mindestens einem der vorhergehenden Ansprüche, dadurch gekennzeichnet, daß das hintere Rahmenteil (3) und das Fensterrahmenteil (9) jeweils als seitlich offenen Führungskanal für die Fensterscheibe (10) eine sich im wesentlichen über ihre gesamte Länge erstreckende, seitlich offene Profilkammer (15, 16) aufweisen und daß die Fensterscheibe (10) mit einem freien Rand (17, 18) in den Profilkammern (15, 16) angeordnet und geführt ist.

7. Fahrzeugtür nach mindestens einem der vorhergehenden Ansprüche, dadurch gekennzeichnet, daß ein den Rand (17, 18) der Fensterscheibe (10) U-förmig umgreifendes Dichtungs- und Führungselement (21) in jeder Profilkammer (15, 16) angeordnet ist.

8. Fahrzeugtür nach mindestens einem der vorhergehenden Ansprüche, dadurch gekennzeichnet, daß Seilumlenkrollen (13) für das Seil (12) eines Seilfensterhebers (11) direkt am Fensterrahmenteil (9) und/oder an Rahmenteilen (3, 5, 7) des Türrahmens (1) oder an Montageteilen angeordnet sind, die mit den Rahmenteilen (3, 5, 7) des Türrahmens (1) verbunden sind.

9. Fahrzeugtür nach mindestens einem der vorhergehenden Ansprüche, dadurch gekennzeichnet, daß je ein Führungskanal (43) für ein Zug- und Druckkabel (44) eines Kabelfensterhebers (41) in ein hinteres und ein unteres Rahmenteil (3, 5) sowie in das Fensterrahmenteil (9) integriert ist.

10. Fahrzeugtür nach mindestens einem der vorhergehenden Ansprüche, dadurch gekennzeichnet, daß je ein Führungskanal (45) für ein Leertrum (46) in das vordere, das hintere und das untere Rahmenteil (2, 3, 5) integriert ist.

11. Fahrzeugtür nach mindestens einem der vorhergehenden Ansprüche, dadurch gekennzeichnet, daß ein Führungskanal (57) für ein der Scheibe (10) zugeordnetes Gleitelement/Zwischenstück (58) in dem hinteren Rahmenteil (3) angeordnet ist.

12. Fahrzeugtür nach mindestens einem der vorhergehenden Ansprüche, dadurch gekennzeichnet, daß zusätzlich ein waagerecht angeordnetes, als untere Begrenzung einer Fensteröffnung (8) dienendes Rahmenteil (7) und eine Diagonalstrebe (6) vorgesehen sind.

13. Fahrzeugtür nach mindestens einem der vorhergehenden Ansprüche, dadurch gekennzeichnet, daß das vordere und/oder obere und/oder untere Rahmenteil (2, 4 bzw. 5) ein geschlossenes Hohlprofil umfassen.

14. Fahrzeugtür nach mindestens einem der vorhergehenden Ansprüche, dadurch gekennzeichnet, daß die Führung für die Fensterscheibe (10) und den Fensterheber (11, 41, 51) zusammen mit dem Tür-Tragemodul (1a) zu einer Baueinheit integriert sind.

15. Fahrzeugtür nach mindestens einem der vorhergehenden Ansprüche, dadurch gekennzeichnet, daß das zur Führung der geschlossenen und der abgesenkten Fensterscheibe (10) dienende Fensterrahmenteil (9) und mindestens das hintere Rahmenteil (3) des Türrahmens (1) jeweils Strangpreßprofilteile sind.

## Claims

1. A vehicle door, in particular a motor vehicle door of frame-type construction, which includes a load-bearing door frame (1) with frame members, forming a door support module (1a), and which has a window lifter (11, 41, 51) for opening and closing a window pane (10), and further door elements, characterised in that at least one load-bearing frame member (3, 9) forming the door frame (1) has a hollow chamber and in an integral structure at least partially defining walls for forming a laterally open guide channel for the window pane (10).

2. A vehicle door according to claim 1 characterised in that the frame member (3, 9) has a closed hollow chamber.

3. A vehicle door according to at least one of the preceding claims characterised in that there is provided a window frame member (9) and it forms a triangular area with its ends and the door frame (1).

4. A vehicle door according to at least one of the preceding claims characterised in that the window frame member (9) serving as a guide for the window pane (10) is integrated into the door frame (1) in such a way that it extends from an upper frame member to a lower frame corner, forming the triangular area.

5. A vehicle door according to at least one of the preceding claims characterised in that the window frame member (9) is a multi-part member and includes at least one hollow profile (25) with a bottom (26) and a defining wall (27) for a profile chamber (15), wherein the other defining wall (28) of the profile chamber (15) is formed by a second part in the form of a profile bar (29).

6. A vehicle door according to at least one of the preceding claims characterised in that the rear frame member (3) and the window frame member (9) each have a laterally open profile chamber (15, 16) extending substantially over their entire length as a respective laterally open guide channel for the window pane (10) and that the window pane (10) is arranged and guided with a free edge (17, 18) in the profile chambers (15, 16).

7. A vehicle door according to at least one of the preceding claims characterised in that a sealing and guide element (21) which embraces the edge (17, 18) of the window pane (10) in a U-shape is arranged in each profile chamber (15, 16).

8. A vehicle door according to at least one of the preceding claims characterised in that cable direction-changing rollers (13) for the cable (12) of a cable window lifter (11) are arranged directly on the window frame member (9) and/or on frame members (3, 5, 7) of the door frame (1) or on mounting members which are connected to the frame members (3, 5, 7) of the door frame (1).

9. A vehicle door according to at least one of the preceding claims characterised in that a respective guide channel (43) for a pulling and pushing cable (44) of a cable window lifter (41) is integrated into a rear and a lower frame member (3, 5) and into the window frame member (9).

10. A vehicle door according to at least one of the preceding claims characterised in that a respective guide channel (45) for an idle run (46) is integrated into the front, the rear and the lower frame members (2, 3, 5).

11. A vehicle door according to at least one of the preceding claims characterised in that a guide channel (57) for a slide element/intermediate portion (58) associated with the pane (10) is arranged in the rear frame member (3).

12. A vehicle door according to at least one of the preceding claims characterised in that there are additionally provided a horizontally arranged frame member (7) serving as a lower boundary of a window opening (8), and a diagonal strut (6).

13. A vehicle door according to at least one of the preceding claims characterised in that the front and/or upper and/or lower frame members (2, 4 and 5 respectively) include a closed hollow profile.

14. A vehicle door according to at least one of the preceding claims characterised in that the guide for the window pane (10) and the window lifter (11, 41, 51) are integrated together with the door support module (1a) to form a structural unit.

15. A vehicle door according to at least one of the preceding claims characterised in that the window frame member (9) which serves to guide the closed and the lowered window pane (10) and at least the rear frame member (3) of the door frame (1) are each extruded shaped members.

## Revendications

1. Porte de véhicule, notamment porte de véhicule automobile en construction séparée qui comporte un châssis de porte porteur (1), formant un module de support de porte (1a) avec des parties de cadre et un lève-vitre (11, 41, 51) pour ouvrir et fermer une vitre (10) et d'autres éléments de porte, caractérisée en ce qu'au moins une partie de cadre porteuse (3, 9) formant le châssis de porte (1) présente une chambre creuse et, en une réalisation en une pièce, au moins partiellement des parois de délimitation pour former un canal de guidage ouvert vers le côté pour la vitre (10).

2. Porte de véhicule selon la revendication 1, caractérisée en ce que la partie de cadre (3, 9) présente une chambre creuse fermée.

3. Porte de véhicule selon au moins l'une des revendications précédentes, caractérisée en ce qu'il est prévu une partie d'encadrement de fenêtre (9) qui forme avec ses extrémités et le châssis de porte (1) un champ triangulaire.

4. Porte de véhicule selon au moins l'une des revendications précédentes, caractérisée en ce que la partie d'encadrement de fenêtre (9) servant de guidage à la vitre (10) est intégrée de telle sorte dans le châssis de porte (1) qu'elle s'étend, en formant le champ triangulaire, d'une partie de cadre supérieure vers un coin de cadre inférieur.

5. Porte de véhicule selon au moins l'une des revendications précédentes, caractérisée en ce que la partie d'encadrement de fenêtre (9) est réalisée en plusieurs parties et comporte au moins un profilé creux (25) avec un fond (26) et une paroi de délimitation (27) pour une chambre profilée (15), l'autre paroi de délimitation (28) de la chambre profilée (15) étant formée par une deuxième partie sous la forme d'une tige profilée (29).

6. Porte de véhicule selon au moins l'une des revendications précédentes, caractérisée en ce que la partie de cadre arrière (3) et la partie d'encadrement de fenêtre (9) ont respectivement, comme canal de guidage ouvert vers le côté pour la vitre (10), une chambre profilée (15, 16) s'étendant essentiellement sur toute leur longueur, ouverte vers le côté et en ce que la vitre (10) est disposée et guidée par un bord libre (17, 18) dans les chambres profilées (15, 16).

7. Porte de véhicule selon au moins l'une des revendications précédentes, caractérisée en ce qu'un élément d'étanchéité et de guidage (21) entourant le bord (17, 18) de la vitre (10) en forme de U est disposé dans chaque chambre profilée (15, 16).

8. Porte de véhicule selon au moins l'une des revendications précédentes, caractérisée en ce que des rouleaux de renvoi de câble (13) pour le câble (12) d'un lève-vitre à câble (11) sont disposés directement à la partie d'encadrement de fenêtre (9) et/ou aux parties de cadre (3, 5, 7) du châssis de porte (1) ou à des parties de montage qui sont reliées aux parties de cadre (3, 5, 7) du châssis de porte (1).

9. Porte de véhicule selon au moins l'une des revendications précédentes, caractérisée en ce que respectivement un canal de guidage (43) d'un câble de traction et de pression (44) d'un lève-vitre à câble (41) est intégré dans des parties de cadre arrière et inférieure (3, 5) ainsi que dans la partie d'encadrement de fenêtre (9).

10. Porte de véhicule selon au moins l'une des revendications précédentes, caractérisée en ce que respectivement un canal de guidage (45) pour un brin de retour (46) est intégré dans les parties de cadre arrière et inférieure (2, 3, 5).

11. Porte de véhicule selon au moins l'une des revendications précédentes, caractérisée en ce qu'un canal de guidage (57) pour une pièce de coulissement/pièce intermédiaire (58) associée à la vitre (10) est disposée dans la partie de cadre arrière (3).

12. Porte de véhicule selon au moins l'une des revendications précédentes, caractérisée en ce que sont prévus de plus une partie de cadre (7) disposée horizontalement, servant de délimitation inférieure d'une ouverture de vitre (8) ainsi qu'une barrette diagonale (6).

13. Porte de véhicule selon au moins l'une des revendications précédentes, caractérisée en ce que les parties de cadre avant et/ou supérieure et/ou inférieure (2, 4 respectivement 5) comprennent un profilé creux fermé.

14. Porte de véhicule selon au moins l'une des revendications précédentes, caractérisée en ce que le guidage de la vitre (10) et du lève-vitre (11, 41, 51), conjointement avec le module porteur de porte (1a) sont intégrés pour former une unité constructive.

15. Porte de véhicule selon au moins l'une des revendications précédentes, caractérisée en ce que la partie d'encadrement de fenêtre (9) servant au guidage de la vitre fermée et abaissée (10) et au moins la partie de cadre arrière (3) du châssis de porte (1) sont respectivement des parties de profilé filées.
